## Europäisches Patentamt
## European Patent Office
## Office européen des brevets

(11) Veröffentlichungsnummer: **0 235 641 B1**

(12) # EUROPÄISCHE PATENTSCHRIFT

(45) Veröffentlichungstag der Patentschrift: **17.07.91**

(51) Int. Cl.5: **F01D 11/08**, F01D 5/08, F01D 11/00

(21) Anmeldenummer: **87102024.4**

(22) Anmeldetag: **13.02.87**

(54) **Schaufel- und Dichtspaltoptimierungseinrichtung für Verdichter von Gasturbinentriebwerken.**

(30) Priorität: **28.02.86 DE 3606597**

(43) Veröffentlichungstag der Anmeldung:
**09.09.87 Patentblatt 87/37**

(45) Bekanntmachung des Hinweises auf die
Patenterteilung:
**17.07.91 Patentblatt 91/29**

(84) Benannte Vertragsstaaten:
**AT CH DE FR GB IT LI NL SE**

(56) Entgegenhaltungen:
EP-A- 0 170 938        FR-A- 2 108 006
FR-A- 2 219 312        GB-A- 622 181
GB-A- 696 133          GB-A- 1 152 331
US-A- 4 329 114        US-A- 4 338 061

PATENT ABSTRACTS OF JAPAN, Band 7, Nr.
128 (M-220)[1273], 3. Juni 1983

INTERAVIA, Band 2, Februar 1983, Seite 102,
GB: "Pratt & Whitney bids to dominate
25-tonne market withPW4000"

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Liebl, Josef, Dipl.-Ing.
Schöttlstrasse 4
W-8060 Dachau(DE)**

**Beschreibung**

Die Erfindung bezieht sich auf ein Einrichtung zur Optimierung radialer Schaufel- und Dichtspalte nach dem Oberbegriff des Patentanspruchs 1.

Rotoren und Gehäuse von Strömungsmaschinen (z.B. Dampfturbinen, Verdichter, Gasturbinen) sind aus Festigkeits- und/oder Gewichtsgründen in der Regel so ausgelegt, daß Gehäusen mit relativ wenig Masse Rotoren mit relativ viel Masse gegenüberstehen. Damit ergeben sich unter anderem folgende Fakten:

- Es kann ein optimales radiales Lauf-/Leitschaufelspiel von z.B. wenigen 1/100 (mm) nur für einen speziellen Lastfall vorgesehen werden. Andere Lastfälle müssen mit Radialspalten auskommen, die sich aus vorstehender Optimierung, dem Kaltspalt und dem thermischen Übergangsverhalten von Rotor/Stator zwischen zwei Lastfällen ergeben.
- Im Falle zu großer Unterschiede im thermischen Übergangsverhalten kann es notwenidg sein, den oben erwähnten "optimalen" Radialspalt größer auszulegen, um in bestimmten Übergangsfällen ein radiales Anstreifen der Lauf-/Leitschaufeln zu vermeiden.
- Die genannten Punkte sind gleichfalls für radiale Dichtungen relevant.

Die Nachteile vorstehender Fakten sind u.a.:
- Leistungs- und Wirkungsgradverlust bzw. Brennstoffmehrverbrauch für Lastfälle, die vom "optimal" ausgelegten abweichen.
- Dito bei Übergangsfällen bzw. instationären Betriebszuständen.
- Anfälligkeit gegen Verdichterpumpen, vornehmlich beim Hochfahren.

Um bezüglich des angesprochenen Problemkreises auf der sicheren Seite liegen zu wollen, ist es z.B. gemäß der US-PS 4,329,114 bekannt, eine in Abhängigkeit von Triebwerksleistungsparametern regelbare Steuereinrichtung der Radialspalte für Verdichter von Gasturbinentriebwerken vorzusehen, bei der zu Turbinenkühlzwecken stets aus einem verhältnismäßig "kalten" Bereich des Verdichters entnommene Luft im Wege eines am äußeren Verdichtergehäuse befindlichen Klappen-Steuerventils entweder gänzlich oder teilweise außen an der betreffenden inneren Leitschaufeltragstruktur - also über eine Axialerstreckung von der Entnahmestelle bis etwa zur letzten Verdichterstufe hin - entlangströmbar sein soll.

Bei einem anderen, aus der US-PS 4,338,061 entnehmbaren überwiegend elektronisch (Computer)/mechanisch (Steuerventil) arbeitenden Radialspalteinstellsystem für Verdichter von Gasturbinentriebwerken soll stets aus einem vergleichsweise weit vorn liegenden Bereich, z.B. aus der 5. Verdichterstufe, zu Turbinenkühl- und Sperrluftzwecken abgeblasene verhältnismäßig kalte Luft - vor deren eigentlicher Verwendungsfunktion - zunächst in die Radialspaltregelung einbezogen werden; dabei kommuniziert u.a. die betreffende Abblasestelle sowohl mit einer außen, verdichtergehäuselängsseitig bis zur letzten Verdichterstufe sich erstreckenden ersten Kanalführung und mit einer zur letzteren parallel geführten zweiten Kanalführung, wobei das Steuerventil einen variablen Luftdurchsatz durch beide Kanalführungen, und damit eine hinsichtlich der Intensität variable Kühlung des Außengehäuses erzwingt. Dabei ist die für den jeweiligen Betriebszustand optimale Stellung des Steuerventils zugleich repräsentativ für den jeweils tatsächlich benötigten Radialspaltwert, der über das Computersystem, unter Beiziehung einschlägier Triebwerksparameter, aus der Differenz zwischen der tatsächlichen (Ist-Wert) und einer für den betreffenden Betriebszustand vorgegebenen Gehäusetemperatur (Soll-Wert) errechnet wird.

Aus den Spaltregel- und Steuersystem nach den beiden zuvor genannten USPatentschriften resultieren im wesentlichen folgende Nachteile:
- aufwendiger elektronischer Bauaufwand,
- konstruktiv aufwendige Luftführungen sowie Steuermittel hierfür (Ventile),
- vergleichsweise hoher Gewichtszuwachs,
- vergleichsweise großer Triebwerksdurchmesser, insbesondere im Verdichterbereich,
- Abzapfung vergleichsweise großer Luftmengen aus mühsam verdichteter Luft,
- insgesamt nicht unbeachtlicher Störanfälligkeitsgrad.

Aus der Zeitschrift "INTERAVIA", 2 (Februar) 1983, Seite 102, mittlere Spalte, letzter Absatz, ist es lediglich für sich schon bekannt, eine sogenannte "aktive" Spaltregelung für den Verdichter eines Gasturbinentriebwerks durch Heißlufteinführung in den betreffenden Verdichterrotor erzielen zu wollen.

Bei einer aus der EP-A 0170 938 bekannten Einrichtung zur Optimierung der Schaufel- und Dichtspalte bei Axialverdichtern von Gasturbinentriebwerken ist es vorgesehen, einen im Bereich des Verdichterendes aus der Verdichterhauptdichtung - zwischen dem Rotor und dem Stator - entweichenden Leckageluftstrom, entgegen der Hauptausströmrichtung im Verdichter, zunächst gegen die letzte sowie mindestens eine darauf folgende weitere Rotortrag- bzw. Laufradscheibe zu leiten und dann gegebenenfalls noch einem anderweitigen Verwendungszweck, z.B. zur Kühlung mindestens einem Verbraucher zuzuführen.

Dabei ist es zum einen nachteilhaft, daß die Entnahmeluftmenge vom über den gesamten Betriebszustand schwankenden Spaltverhalten der z.B. als Labyrinthdichtung ausgebildeten Verdichterhauptdichtung abhängig ist; d.h. die Entnahmeluftmenge ist verhältnismäßig starken Schwankungen unterworfen, worunter eine angestrebte kontinuierliche Aufheizungseffektivität der betroffenen Rotorbauteilen leidet. Insbesondere bei instationärem Betrieb und damit verknüpften extrem geringen Hauptdichtungsspaltweiten ist die benötigte Entnahmeluftmenge nicht mehr in ausreichendem Maße bereitstellbar.

Ein weiterer wesentlicher Nachteil der zuvor erörterten bekannten Einrichtung ist es, daß die zur örtlichen Bauteilaufheizung bzw. -belüftung verwendete, aus der Verdichterhauptdichtung abströmende Leckageluft eine vergleichsweise extrem hohe Temperatur aufweist; d.h., die aus der letzten Verdichterstufe entnommene, vergleichsweise hochtemperaturige Druckluft erfährt durch zusätzliche Luftreibung zwischen rotierenden und stehenden Dichtungsteilen der Hauptdichtung eine zusätzliche Temperaturerhöhung. Hierzu kommen gegebenenfalls weitere Lufttemperaturerhöhungen hinzu, die sich z.B. aus der Luftreibung zwischen einer stationären Gehäusewand, z.B. der Brennkammeraußengehäusewand, und der als Träger des rotierenden Dichtungsteils ausgebildeten Rotortragscheibe ausbilden; daraus folgt, daß bei der bekannten Einrichtung sämtliche, zumindest die letzte, die vorletzte sowie eine weitere Radscheibe, im Bereich deren rotorachsnaher größter Scheibenmasseninhalte mit jeweils im wesentlichen gleicher, relativ heißer Entnahmeluft beaufschlagt werden; mit anderen Worten ist keine dem kontinuierlichen Temperaturanstiegsverlauf der Druckluftströmung im Verdichter bzw. Verdichterkanal folgende örtlich genaue thermische Steuerung des Verdichterrotors zur Optimierung der Radialspalte gewährleistet.

Aus der FR-A-21 08 006 ist eine vornehmlich für senkrecht- oder kurzstartende oder -landende Flugzeuge (VTOL/STOL) konzipierte Gasturbinenanlage bekannt mit entgegengesetzt zur Durchströmrichtung im Verdichter verlaufender Heißgas-Durchströmrichtung der Turbine, die heißgasaustrittsseitig mit seitlich am Triebwerk schwenkbar angeordneten Düsen kommuniziert; die Gasturbinenanlage beinhaltet verdichter- und turbinenrotorseitig integrierte, zwecks Kühlung (Lager, Turbine) und Abdichtung (Sperrluft) mit unterschiedlichen Drücken und Temperaturen sowie teilweise einander entgegengerichtet druckluftbeaufschlagte Rotorsektionen; die Druckluft soll an dafür repräsentativen Stellen aus dem Verdichter entnommen werden; so z.B. innenkanalseitig aus der vorletzten Axialverdichterstufe um einer zwischen zwei Laufradscheiben ausgebildeten Kammer sowie den beiden nabeninnenseitigen Laufradabschnitten (gleich hohes Temperaturniveau) zugeführt zu werden; von diesen Laufradabschnitten soll die entnommene Druckluft zunächst einem zwischen der letzten Laufradscheibe und einer Tragscheibe für die Rotorhauptdichtung eingeschlossenen Ringraum und dann einem weiteren Ringraum zugeführt werden, in den zugleich anderweitige Verdichterentnahmeluft über eine Dichtung als Sperr-Leckluft abströmt.

Bei einer aus der FR-A 22 19 312 bekannten Dicht- und Kühlversorgungseinrichtung von Lagern eines Gasturbinentriebwerks soll u.a. verhältnismäßig "kalt" zu veranschlagende Verdichterluft aus einem stromaufwärtigen Teil des Verdichters, innenkanalseitig, an nur einer Stelle entnommen und über eine zwischen zwei Laufradscheiben eingeschlossene Luftverteilereinrichtung mit Schaufeln in mehrere, der Rotorkonfiguration gemäß örtlich zergliederte Teilströme aufgespalten werden; einer dieser Teilströme soll dabei zur Kühlung sämtlicher in stromabwärtiger Richtung aufeinanderfolgenden Radscheiben des Verdichters vorgesehen sein.

Ein aus der GB-A 622 188 bekanntes Gasturbinentriebwerk sieht - stromaufwärtig im Verdichter die Entnahme verhältnismäßig kalter Verdichterluft niedrigen Druckes als Lagerkühlluft vor; und zwar verdichterkanalinnenseitig über Öffnungen, die mittig zwischen axial geteilten Zwischenringen, radkranzseitig, angeordnet sind; dabei strömt die entnommene Kühlluft in einen zwischen zwei Radscheiben des Verdichters und einer angrenzenden zentralen Hohlwelle ausgebildeten Ringraum ein und wird dann teilweise über in Fußsektionen der Radscheiben enthaltenen Öffnungen Kammern zugeführt, die zwischen den Fußsektionen und besagter Hohlwelle ausgebildet sind. Ein übriger Teil der aus dem Verdichter entnommenen Kühlluft soll aus dem betreffenden Ringraum über in der Hohlwelle enthaltene Öffnungen als Lagerkühlluft zugeführt werden. Im bekannten Fall soll ferner aus einer stromabwärtigen Stufe des Verdichters entnommene Luft verhältnismäßigen hohen Druckes ebenfalls an der Innenseite des Verdichterkanals sowie mittig zwischen zwei Zwischenringteilen, über ringschlitzartige Öffnungen entnommen und dann über einzelne von beiden Ringteilen ausgebildete Radialkanäle sowie über Kammern und Durchbrüche einer zentral in der Hohlwelle liegenden Innenwelle zugeführt werden, die ebenfalls, als Hohlwelle, die so entnommene Druckluft zwecks Kühlung in die Turbinen leitet.

Der Erfindung liegt die Aufgabe zugrunde, eine Einrichtung gemäß Oberbegriff des Patentanspruchs 1 anzugeben, die bei zugleich verhältnismäßig einfachem Aufbau die örtlich geforderte Belüftungstemperatur und -menge auch mit Rücksicht auf schroffe Lastwechsel gewährleistet.

Die gestellte Aufgabe ist mit den Merkmalen des Kennzeichnungsteils des Patentanspruchs 1 erfindungsgemäß gelöst.

Auf dieses Weise ist es vergleichsweise einfachst möglich, die örtlichen kranzseitigen Bauteiltemperaturen der Radscheiben weitestgehend den örtlichen nabenseitigen Rotorbauteil- bzw. Scheibentemperaturen - oder umgekehrt - aneinander anzupassen.

Es kann auch bei einem verhältnismäßig niedrigen Stufendruckniveau im Verdichterkanal eine ausreichende Druckdifferenz für ausreichende Entnahmebzw. "Ventluftmengen" zur thermischen Rotorbauteilsteuerung in die Wege geleitet werden.

Eine zur Erfüllung der zuvor genannten Kriterien besonders vorteilhafte Ausgestaltung ergibt sich aus Patentanspruch 5. Im Wege der Luftkammern nach Anspruch 5, zwischen zwei benachbarten Radscheiben, bzw. zwischen einer Radscheibe und einer Tragscheibe, wird der Entnahmeluft bzw. "Ventluft" in den betreffenden Luftkammern eine bauteilbezogene Umfangsgeschwindigkeit aufgeprägt. Es entsteht also innerhalb der betreffenden Luftkammern, aufgrund einer durch aufgeprägte Bauteilrotation erzwungenen Luftwirbelbildung, eine geringere Druckänderung als in den durch die Luftkammern unterteilten äußeren und inneren Ringräumen, in denen die Luftströmung den Gesetzmäßigkeiten des "freien Wirbels" unterworfen ist. Die als Fogle der erwähnten örtlichen Anordnung sowie Ausbildung der Luftkammern sich ergebende geringere Druckänderung ermöglicht somit, daß der örtliche Abzapfdruck für die Steuer- bzw. "Ventluft" entsprechend niedrig gewählt werden kann oder, anders ausgedrückt, eine ausreichend hohe Druckdifferenz an den betreffenden "Ventluft" eintrittsöffnungen vorliegt, die an der inneren Wand des Verdichterkanals angeordnet sind.

Vorteilhafte weitere Ausgestaltungen der Erfindung ergeben sich aus den Patentansprüchen 2 bis 4 bzw. 6 bis 14.

Anhand der Zeichnungen ist die Erfindung beispielsweise weiter erläutert; es zeigen:

Fig. 1    einen Teillängsschnitt eines Axialverdichterrotors,

Fig. 2    eine vergrößerte Bauteileinzelheit aus Fig. 1,

Fig. 3    einen Bauteilschnitt gemäß II-II der Fig. 2,

Fig. 4    einen weiteren Teillängsschnitt eines Axialverdichterrotors, der vorrangig von Fig. 1 durch abgewandelte Ausbildung von Entnahme- bzw. Eintrittsöffnungen abweicht und

Fig. 5    ein Teillängsschnitt eines Axialverdichterrotors, worin eine weitere vorteilhafte Ausgestaltung der Erfindung im Hinblick auf die Axialverdichterhauptdichtung verkörpert ist.

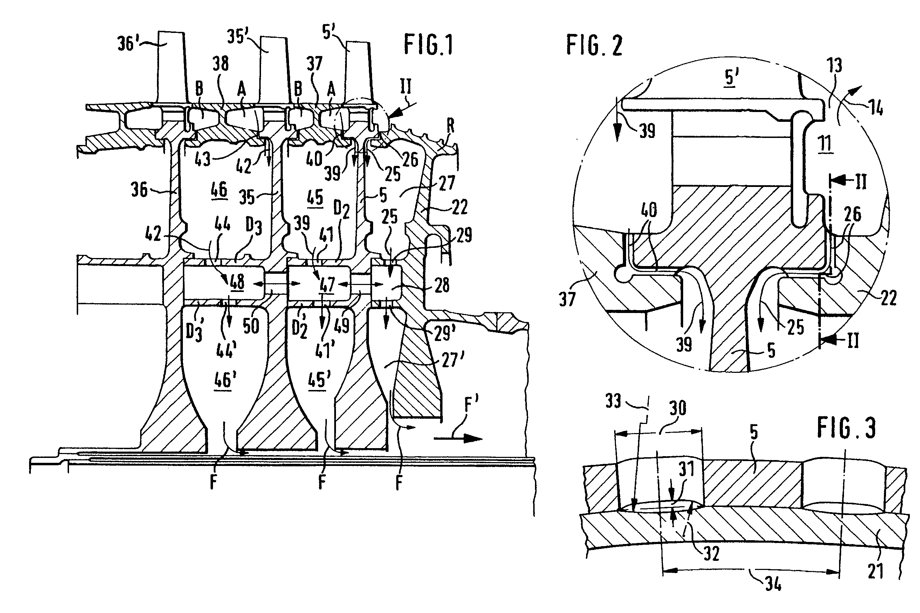

In den nachfolgend näher erläuterten Beispielen der Erfindung nach den Fig. 1 bis 5 sind im wesentlichen jeweils gleiche Bauteile mit gleichen Bezugszeichen belegt.

Gemäß Fig. 1 bis 5 besteht der Axialverdichterrotor -jeweils von links nach rechts gesehen- aus axial benachbarten Radscheiben 36,35,5, die mit Laufschaufeln 36' ,35' und 5' bestückt sind.

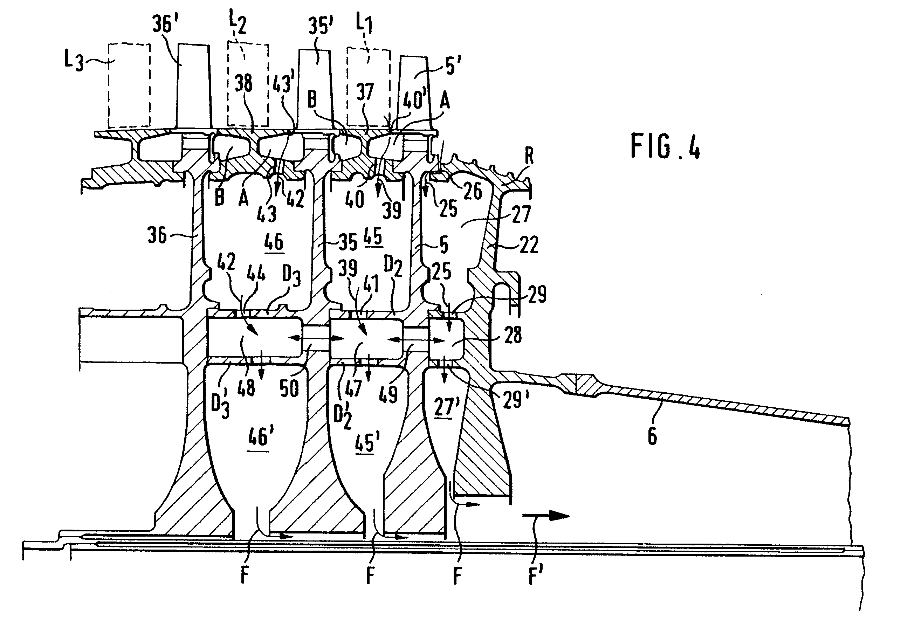

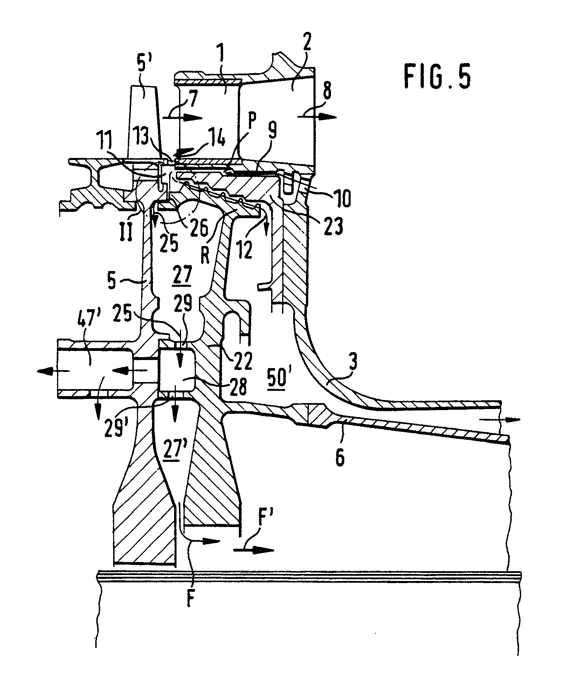

Zugehörige Leitschaufeln der betreffenden Verdichterstufen sind z.B. in Fig. 4 der Reihe nach mit $L_3$, $L_2$, $L_1$ bezeichnet. Die jeweils letzte Radscheibe 5 ist mit einer axial nachgeschalteten Tragscheibe 22 verknüpft, die im äußeren Umfangsbereich als rotierendes Dichtungsteil R der z.B. labyrinthartigen Rotorhauptdichtung (R, 23, s.h. auch Fig.5) ausgebildet ist.

Wie in Fig. 1 und 4 dargestellt ist - und nunmehr von rechts nach links gesehen - weist der jeweilige Axialverdichterrotor im äußeren Umfangsbereich angeordnete Zwischenringe 37, 38 auf, mit denen die einzelnen Radscheiben 5, 35,36 axial untereinander beabstandet sind. Die genannten Zwischenringe 37,38 weisen jeweils durch einen Radialsteg voneinander getrennte, seitlich offene Hohlräume A,B bzw. Ausnehmungen auf, die gegenüber den angrenzenden Radscheibenabschnitten überwiegend verschlossen sind bzw. axial an diese angrenzen.

Desweiteren sind Luftkammern 28,47,48 vorgesehen, die jeweils in als Axialdistanzhalterungen der Scheiben dienende äußere und innere Wandabschnitten, z.B. D2, D3 bzw. D2', D3', integriert sind. Mittels dieser zuvor genannten Luftkammern 28,47,48 und deren betreffenden äußeren und inneren Wandabschnitten werden die Zwischenräume zwischen den einander benachbarten Radscheiben 5,35 bzw. 35,36 in jeweils äußere und innere Ringräume 45,45' bzw. 46,46' aufgeteilt. Das gleiche gilt sinngemäß in Verbindung mit der Anordnung der letzten Radscheibe 5 und der axial beabstandet nachgeschalteten Tragscheibe 22. Die betreffenden äußeren wie inneren Ringräume sind dort mit 27 bzw. 27' bezeichnet.

Die zuvor genannten Zwischenringe 37,38 sind fernerhin so ausgebildet, daß sie mit ihren äußeren endseitigen Stirnkanten in die betreffenden Schaufelfußplatten der Laufschaufeln 5',35',36' axial fluchtend, bündig angrenzen. Erfindungsgemäß wird nun die aus dem betreffenden Verdichterkanal zur thermischen Steuerung der Radscheiben verwendete Entnahmeluft gemäß Fig. 1 (Pfeilrichtung 39,42) im Wege eines stoßkantenseitigen Leckflusses zwischen den stromabwärtigen Stirnenden der äußeren Axialwandteile der Zwischenringe 37,38 und benachbarten Gegenflächen der betreffenden Schaufelfußplatten bereitgestellt. Die Entnahmebzw. Steuerluft gelangt dann über die Hohlräume A der Zwischenringe 37,38 zu überwiegend schlitzförmig ausgebildeten Eintrittsöffnungen 40,43, die jeweils zwischen den stromabwärtigen Stirnenden der inneren Axialwandteile der Zwischenringe 37,38 und den daran angrenzenden, schaufelfußseitigen Radscheibenstirnflächen ausgebildet sind. Über die zuvor genannten Eintrittsöffnungen 40,43 wird dann die Entnahme- bzw. Steuerluft gemäß Pfeilrichtungen 39 bzw. 42 äußeren Ringräumen 45 bzw. 46 zugeführt. Aus den zuletzt genannten äußeren Ringräumen 45,46 gelangt dann die entnommene Steuer- oder Ventluft über Bohrungen 41 bzw. 44 in den äußeren Wandabschnitten D2,D3 in die betreffenden Luftkammern 47,48. In diesen Luftkammern 47,48 wird der zugeführten Druck-luft eine bauteilbezogene Umfangsgeschwindigkeit im eingangs genannten Sinne aufgeprägt. Ferner sind in den jeweils inneren Wandabschnitten D2' bzw. D3' Austrittsbohrungen 41',44' angeordnet, aus welchen die Entnahmebzw. Steuerluft gemäß aufgezeigten Pfeilrichtungen gegen die nabenseitig verdickten inneren Partien der betreffenden Radscheiben 5,35,36 gerichtet werden kann, um dann nachher die koaxialen Radscheibeninnenflächen in Axialrichtung zu umströmen (Pfeilfolge F). Aus den zuletzt genannten Strömungsrichtungen kann dann die gesamte Entnahmeluft F' im Wege des vorgegebenen Druckgefälles im Rahmen des aero-thermodynamischen Kreisprozesses noch anderweitigen Verwendungszwecken zugeführt werden, z.B. als Sperrdichtungsluft oder z.B. zu Turbinenbauteil-Kühlzwecken, und zwar im Wege des kombinierten Verdichter-Turbinen-Rotorsystems.

Aus Fig. 1 und 4 ist ferner zu erkennen, daß die Tragscheibe 22 des Rotors im Wege des am äußeren Umfang angeordneten rotierenen Dichtungsteils R ebenfalls als axiales Abstandsmittel zwischen der letzten Radscheibe 5 und der Tragscheibe 22 fungiert. Die Ausbildung und Anordnung der Rotorhauptdichtung R,23 im Benehmen mit der zugeführten Entnahme- bzw. Steuerluftmenge (Pfeil 25) wird im besonderen zu Fig. 5 später ausführlicher behandelt.

Das Ausführungsbeispiel nach Fig. 4 weicht vom Ausführungsbeispiel nach den Fig. 1 bis 3 hauptsächlich dadurch ab, daß äußere Entnahmeöffnungen 40',43' zwischen stromabwärtigen Stoßkantenenden der äußeren Axialwandteile der Zwischenringe 37,38 und den angrenzenden Fußplatten der Laufschaufeln 5',35' ausgebildet sind. Eine weitere Abweichung gegenüber Fig. 1 im besonderen besteht darin, daß in den Enden der stromabwärtigen inneren Axialwandteile der Zwischenringe 37,38 vorzugsweise im Querschnitt ovale Eintrittsöffnungen 40,43 angeordnet sein sollen.

Sinngemäß auch für Fig. 1 geltend, sollen gemäß Fig. 4 die betreffenden Öffnungen, z.B. 40,40' jeweils zwischen den Leitschaufeln L1 und den Laufschaufeln 5' aufeinander folgender Verdichterstufen angeordnet sein. Der zuvor erwähnte jeweilige Entnahmeluftstrom 39 bzw. 42 wird dann gemäß Fig. 4 in der ansonsten zu Fig. 1 schon beschriebenen Weise über die äußeren Ringräume 45 bzw.

46 sowie über die Luftkammern 47,48 den betreffenden inneren Ringräumen 45' bzw. 46' zugeführt.

Gemäß Fig. 1 und 4 kann also die Belüftung bzw. die thermische Steuerung auf die angegebenen Radscheibenpositionen im gewünschten Maße verteilt werden. Es ist dabei im allgemeinen Voraussetzung, daß für die Entnahme bzw. Ventluftzufuhr an den verhältnismäßig stromaufwärts liegenden Rotorzonen ein ausreichend hoher Luftdruck im Verdichterkanal bzw. Stufendruck vorliegt. Mithin entsprechen als die Eintrittstemperaturen der Entnahmeluft weitestgehend den rotornabenseitig herrschenden Steuerlufttemperaturen. Dadurch ergeben sich bei den dargestellten Varianten nach Fig. 1 bis 4 die Voraussetzungen für eine optimale Belüftung und thermische Steuerung der betreffenden Radscheibenpartien, die durch ausgeglichene Bauteiltemperaturen zwischen der Scheibennabe und dem jeweiligen Kranz, und zwar sowohl bei stationärem als auch bei instationärem Betrieb gekennzeichnet ist.

Dabei wäre ferner zu beachten, daß z.B. im Hinblick auf die Bauweise nach Fig. 1 gemäß jeweiligen Entnahmeluftzufuhrpositionen 25,39 und 42 in Verbindung mit den schlitzförmigen Eintrittsöffnungen, z.B. 26,40,43 durch den in Richtung der Hauptströmung des Verdichters zunehmenden Druckanstieg eine Abstimmung der jeweiligen Eintrittsquerschnitte notwendig ist, um die Luftdrücke innerhalb der äußeren Ringräume 27,45,46 sowie innerhalb der Luftkammern 28,47,48 innerhalb des Rotors, möglichst niedrig zu halten und dadurch an der vorderen Entnahmeposition 42 (Schlitzöffnung 43) noch eine ausreichende Belüftung zu gewährleisten.

Für einen längeren Betrieb ist zu berücksichtigen, daß sich die Eintrittsquerschnitte für die Entnahme- bzw. Steuerluft evtl. durch Verschleiß an den Anlageflächen zwischen den Ringbauteilen 37,38 und den Rotorscheiben geringfügig verkleinern können. Die Drücke zwischen den Luftkammern 28, 47 und 48 können dabei über Bohrungen 49 und 50, die in den Radscheiben 5 sowie 35 angeordnet sind, ausgeglichen werden.

Die zuvor in Fig. 1 bis 4 erwähnten Luftkammern 28,47,48 können vorzugsweise gleichförmig über den Umfang verteilt angeordnet sein, d.h. also z.B. durch Radialstege voneinander getrennt sein.

Gemäß Fig. 5 ist dem Leitschaufelgitter 1 der letzten Axialverdichterstufe ein mit einer Triebwerksbrennkammer (nicht weiter dargestellt) kommunizierender Axialdiffusor 2 nachgeschaltet. Der Axialdiffusor 2 und das Leitschaufelgitter 1 sind zusammen oberhalb des stationären Teils 23 der Rotorhauptdichtung angeordnet, deren zuvor schon erwähnter rotierender Dichtungsteil R radial außen an der Tragscheibe 22 ausgebildet ist. Dabei soll ferner zwischen vorderen Abschnitten des stationären und rotierenden Teils der Hauptdichtung und hinteren schaufelfußseitigen Radscheibenpartien der letzten Radscheib 5 ein Ringkanal 11 ausgebildet sein; der Ringkanal 11 soll weiter mittels stromab des Axialdiffusors 2, an seinem Austritt 8 entnommener Verdichterluft beaufschlagt und über einen zwischen den Laufschaufeln 5' und dem Leitschaufelgitter 1 der letzten Verdichterstufe angeordneten Ringspalt 13 mit dem Verdichterkanal verbunden sein. Aus dem Ringkanal 11 können somit sowohl die Hauptdichtung R,23 als auch die zwischen der letzten Radscheibe 5 nebst Tragscheibe 22 ausgebildeten Ringräume 27,27' mit Druckluft beaufschlagt bzw. belüftet werden.

Aus Fig. 5 in Kombination mit den voranstehenden Figuren, insbesondere nach Fig. 2, erkennt man, daß der zuvor genannte Ringkanal 11 über Öffnungen für die Druckluftzufuhr, hier z.B. Schlitze 26, mit den Ringräumen 27 bzw. 27' verbindbar ist.

Gemäß Fig. 2 und 5 sind also die zuvor genannten Schlitze 26 bzw. schlitzförmigen Eintrittsöffnungen zwischen den vorderen Stirnflächen des rotierenden Dichtungsteils R und den angrenzenden Gegenflächen der letzten Laufradscheibe 5 ausgebildet.

Gemäß Fig. 5 ist es ferner vorteilhaft, daß die zuvor schon genannten örtlichen, schlitzförmigen Eintrittsöffnungen 26 der Rotorinnenraumbelüftung außen, im Bereich zwischen der letzten Rotorscheibe 5 und der Tragscheibe 22 angebracht sind, so daß die Tragscheibe 22 nach hinten verschlossen ausgeführt werden kann. Der entscheidende Vorteil der verhältnismßig weit radial nach außen verlegten schlitzförmigen Eintrittsöffnungen 26 liegt darin begründet, daß die Entnahme- bzw. Steuerluftzufuhr weitestgehend unabhängig von der Sekundärluftaufheizung druch Luftreibung sowie ferner unabhängig von dem Spaltverhalten der labyrinthartigen Rotorhauptdichtung ausgeführt werden kann.

Aus Fig. 5 geht ferner hervor, daß der Ringkanal 11 mit einem zwischen dem stationären Teil 23 Hauptdichtung und den Innenwandpartien des Leitschaufelgitters 1 und des Axialdiffusors 2 angeordneten Druckluftführungskanal P in Verbindung steht, der über Druckluftzufuhrbohrungen 10 im inneren Teil 3 der Brennkammeraußengehäusewand an die Sekundärluftzufuhr aus der Brennkammer - stromab des Axialdiffusors 2 - angeschlossen ist.

Im Rahmen der Erfindung kann ferner die Aufteilung, Anzahl und Dimensionierung der zuvor erwähnten Druckluftzufuhrbohrungen 10 (Fig. 5) in Abhängigkeit von der erforderlichen Belüftungsmenge 9 ausgewählt werden.

Dabei ist ferner besonders erfindungswesentlich, daß die radiale Anordnungshöhe der Druckluftzufuhrbohrungen 10 in Bezug auf die Verdichterachse im wesentlichen mit der radialen Position der sich maximal örtlich ausbildenden Luftreibung übereinstimmt.

In Verbindung mit der Ausbildung der Erfindung nach Fig. 5 ergeben sich weitere folgende vorteilhafte Gesichtspunkte bzw. Erfindungskriterien:

Der Druck innerhalb des Ringkanals 11 wird durch den Ringspalt 13 dem Druck am Rotoraustritt bzw. dem Druck am Leitgitter-Eintritt 7 angeglichen.

Durch die Druckluftzufuhrbohrungen 10 in Verbindung mit dem Druckluftführungskanal P kann dann aufgrund des Druckanstieges zwischen dem Leitgitter-Eintritt 7 und dem Diffusoraustritt 8 eine ausreichende Belüftungsmenge 9 für den Ringkanal 11 mittels am Verdichteraustritt entnommener Druckluft bereitgestellt werden.

Aus der im Ringkanal 11 vorhandenen Luftmenge strömt der betriebsbedingte Leckageluftstrom 12 in einen angrenzenden Raum 50, beispielsweise des Turbinen-Sekundärluftsystems, ab. Die übrige Luftmenge 14 wird durch den Ringspalt 13 dem Verdichterhauptstrom wieder zugeführt und erfährt dann innerhalb des Leitschaufelgitters 1 und des Axialdiffusors 2 eine schnelle Beschleunigung auf "im Verdichterkanal" herrschende Geschwindigkeit der örtlichen Verdichterhauptströmung.

Fig. 5 weicht im übrigen noch von Fig. 1 und 4 dadurch ab, daß die Scheibenbelüftung zwecks thermischer Beeinflussung der Radscheiben, z.B. 5, und zwar in Bezug auf die Hauptdurchströmrichtung des Verdichters, von hinten nach vorne bzw. von rechts nach links über die Luftkammern 28 bzw. 47" und so fort erfolgen kann.

Gemäß Fig. 2 und 3 kann die Gestaltung der zuvor erwähnten schlitzförmigen Eintrittsöffnungen 26 entlang der Trennstellen zwischen Radscheibe 5 und Tragscheibe 22 bei einem oder bei beiden genannten Bauteilen erfolgen.

Die Dimensionierung der betreffenden schlitzförmigen Eintrittsöffnungen 26 wie die maxiamale Schlitzlänge 30 (Fig. 3), die maximale Aussparungstiefe 31, die Formradien 32 und 33 und die Umfangteilung bzw. die maximale Anzahl (Teilung 34 der Schlitze 26) bedarf einer Auslegung, die den festigkeitsseitigen Anforderungen gerecht wird. Der daraus resultierende maximale Öffnungsquerschnitt bestimmt die größtmögliche Entnahmebzw. Steuerluftmenge 25 und damit die Drücke in den äußeren bzw. inneren Ringräumen 27 bzw. 27' sowie in den Luftkammern 28 innerhalb des Rotors.

Innerhalb des zuvor genannten äußeren Ringraums 27 (Fig.1 und 5) bewirkt die nach innen strömende Steuerluftmenge 25 ferner eine Abkühlung der von außen durch Luftreibung aufgeheizten Tragscheibe 22. Danach strömt die Steuerluftmenge 25 durch die äußeren Kammeröffnungen 29 in die betreffenden Luftkammern 28, zwischen der Tragscheibe 22 und der Radscheibe 5, ab. Ab hier stimmt die weitere Aufteilung der zuvor genannten Steuerluftmenge 25 wieder sinngemäß mit der zuvor schon erwähnten Aufteilung überein; d.h., die Entnahme- bzw. Steuerluftmenge 25 strömt über die radial innen liegenden Bohrungen 29' aus den betreffenden Luftkammern 28 in den inneren Ringraum 27' ab, der im wesentlichen zwischen den verdickten Nabenabschnitten der Radscheibe 5 und der Tragscheibe 22 ausgebildet ist.

Zu Fig. 5 wäre noch zu vermerken, daß das innere Teil 3 der Außengehäusewand der Brennkammer vorzugsweise zu einer Ringbrennkammer gehören kann. Mit anderen Worten kann also die über die Druckluftzufuhrbohrungen 10 zugeführte Belüftmenge 9 aus einem Gehäusezwischenraum, zwischen dem Flammrohr und dem zuvor genannten inneren Teil 3, zugeführt werden. Es ist aber durchaus möglich, die zuvor genannten Druckluftzufuhrbohrungen 10 mit einem radial innen liegenden Doppelgehäuseringraum der Brennkammer kommunizieren zu lassen, wobei dieser Doppelgehäuseringraum aus einem Sekundärluftanteil der Brennkammer, stromab die Axialdiffusors 2, gespeist wird.

**Patentansprüche**

1. Einrichtung zur Optimierung radialer Schaufelund Dichtspalte an einem Axialverdichter eines Gasturbinenstrahltriebwerks, der mit Laufschaufeln (36',35',5') bestückte, untereinander benachbarte Ringräume (46,46';45,45') ausbildende Radscheiben (36,35,5) aufweist, die durch Zwischenringe (38,37) axial beabstandet sind, die zusammen mit benachbarten Schaufelfußplatten die innere Kanalwand des Verdichters ausbilden, und worin der Verdichterrotor mittels aus dem Verdichter entnommener Druckluft (42,39) belüftet und thermisch gesteuert ist, die einander benachbarten Ringräumen zugeführt wird, dadurch gekennzeichnet, daß die Druckluft über im jeweils stromabwärtigen Bereich eines Zwischenringes (38;37) ausgebildete, an der inneren Kanalwand des Verdichters angeordnete Öffnungen (43';40') aus mehreren aufeinander folgenden Verdichterstufen, jeweils zwischen einer Leit- und Laufschaufel (L$_2$,35'; L$_1$,5'), entnommen und den betreffenden Ringräumen (46,46';45,45') zugeführt wird.

2. Einrichtung nach Anspruch 1, dadurch gekennzeichnet, daß die Öffnungen (40';43') zwischen stromabwärtigen Stirnflächen der Zwischenringe (37;38) und daran angrenzenden seitlichen Stirnflächen der Radscheiben (5,35) ausgebildet sind.

3. Einrichtung nach Anspruch 1 oder 2, bei der die Zwischenringe (37) beidseitig gegen benachbarte seitliche äußere Stirnflächen der Radscheiben (5;35) offene, durch einen mittigen Radialsteg voneinander getrennte Hohlräume (A;B) aufweisen, dadurch gekennzeichnet, daß die Öffnungen (40';40) an oder in stromabwärtigen äußeren und/oder (40;43) inneren Axialwandteilen der Zwischenringe (37) angeordnet sind und mit dem betreffenden einen Hohlraum (A) in Verbindung stehen.

4. Einrichtung nach Anspruch 3, dadurch gekennzeichnet, daß die Druckluftzufuhr vom Verdichterkanal in den betreffenden Hohlraum (A) über einen stoßkantenseitigen Leckfluß (39;42) zwischen den stromabwärtigen Stirnenden der äußeren Axialwandteile der Zwischenringe (37;38) und benachbarten Gegenflächen der Schaufelfußplatten bereitgestellt wird.

5. Einrichtung nach einem oder mehreren der Ansprüche 1 bis 4, dadurch gekennzeichnet, daß die Ringräume zwischen benachbarten Radscheiben (5;35,36) mittels in Axialdistanzhalterungen (D$_2$;D$_3$) der Scheiben integrierter, koaxial über dem Umfang durch Zwischenwände voneinander getrennter Luftkammern (47;48) in äußere und innere Ringräume (45,45';46,46') zergliedert sind, die über Bohrungen (41,41';44,44') in den äußeren und inneren Wandabschnitten der Distanzhalterungen mit den Luftkammern (47;48) in Verbindung stehen.

6. Einrichtung nach einem oder mehreren der Ansprüche 1 bis 5, wobei einem Leitschaufelgitter (1) der letzten Axialverdichterstufe ein mit der Triebwerksbrennkammer kommunizierender Axialdiffusor (2) nachgeschaltet ist, der zusammen mit dem Leitschaufelgitter (1) oberhalb des stationären Teils (23) einer Hauptdichtung des Rotors angeordnet ist, deren rotierender Dichtungsteil (R) radial nach außen an einer Tragscheibe (22) ausgebildet ist, gekennzeichnet durch folgende Merkmale:
   - der rotierende Dichtungsteil (R) ist als Abstandshalter zwischen der letzten Radscheibe (5) und der Tragscheibe (22) ausgebildet;
   - zwischen vorderen Abschnitten des stationären und rotierenden Teils der Hauptdichtung und hinteren schaufelfußseitigen Radscheibenpartien der letzten Radscheibe (5) ist ein Ringkanal (11) ausgebildet;
   - der Ringkanal (11) ist mittels stromab des Axialdiffusors (2) entnommener Verdichterluft beaufschlagt und über einen zwischen den Laufschaufeln (5') und dem Leitschaufelgitter (1) der letzten Verdichterstufe angeordneten Ringspalt (13) mit dem Verdichterkanal verbunden;

- aus dem Ringkanal (11) werden sowohl die Hauptdichtung als auch zwischen der letzten Radscheibe (5) und der Tragscheibe (22) ausgebildete äußere und innere Ringräume (27;27') mit Druckluft beaufschlagt;

- die Aufteilung in äußere und innere Ringräume (27;27') erfolgt mittels äußerer und innerer Wandabschnitte von Luftkammern (28), die zwischen der letzten Radscheibe (5) und der Tragscheibe (22) angeordnet sind.

7. Einrichtung nach Anspruch 6, dadurch gekennzeichnet, daß der Ringkanal (11) über Öffnungen oder -schlitze (26) für die Druckluftzufuhr mit den Ringräumen (27;27') verbunden ist, und die Öffnungen oder Schlitze (26) entweder am stromaufwärtigen Ende des rotierenden Dichtungsteils (R) oder zwischen dessen vorderen Stirnflächen und den angrenzenden Gegenflächen der letzten Radscheibe (5) ausgebildet sind.

8. Einrichtung nach Anspruch 6 oder 7, dadurch gekennzeichnet, daß der Ringkanal (11) mit einem zwischen dem stationären Teil (23) der Hauptdichtung und den Innenwandpartien des Leitschaufelgitters (1) und des Axialdiffusors (2) angeordneten Druckluftführungskanal (P) in Verbindung steht, der jeweils wiederum über Druckluftzufuhrbohrungen (10) im inneren Teil (3) der Brennkammeraußengehäusewand an die Sekundärluftzufuhr aus der Brennkammer - stromab des Axialdiffusors (2) - angeschlossen ist.

9. Einrichtung nach Anspruch 8, dadurch gekennzeichnet, daß die Druckluftzufuhrbohrungen (10) an einen inneren Doppelgehäuseringraum der Brennkammer angeschlossen sind.

10. Einrichtung nach einem oder mehreren der Ansprüche 1 bis 9, dadurch gekennzeichnet, daß die Öffnungen (26; 40; 43) zumindest teilweise schlitzförmig ausgebildet sind.

11. Einrichtung nach einem oder mehreren der Ansprüche 1 bis 10, dadurch gekennzeichnet, daß die jeweils in den stromabwärtigen inneren Axialwandteilen der Zwischenringe (37;38) angeordneten Öffnungen (40;43) als Bohrungen mit vorzugsweise ovalem Querschnitt ausgebildet sind.

12. Einrichtung nach Anspruch 8, dadurch gekennzeichnet, daß die Aufteilung, Anzahl und Dimensionierung der Druckluftzufuhrbohrungen (10) von der erforderlichen Belüftungsmenge (9) abhängt.

13. Einrichtung nach Anspruch 12, dadurch gekennzeichnet, daß die radiale Anordnungshöhe der Druckluftzufuhrbohrungen (10) in Bezug auf die Verdichterachse im wesentlichen mit der radialen Position der maximalen Luftreibung übereinstimmt.

14. Einrichtung nach einem oder mehreren der Ansprüche 1 bis 13, dadurch gekennzeichnet, daß die Luftkammern (28;47;48) über Druckausgleichsbohrungen (49;50) in den Radscheiben (5;35) untereinander in Verbindung sind.

**Claims**

1. System for optimizing radial blade and seal clearances on an axial-flow compressor of a turbojet engine having rotor disks (36, 35, 5) which are fitted with rotor blades (36', 35', 5'), form adjacent annuli (46, 46'; 45, 45') between them, are spaced axially apart by spacers (38, 37) and together with adjacent blade pedestals, form the compressor duct inner wall, and where the compressor rotor is vented and thermally controlled by means of compressed air (42, 39) taken from the compressor, said air being admitted to mutually adjacent annuli, characterized in that the air is bled, through ports (43'; 40') formed in the respective downstream area of a spacer (38; 37) and arranged on the inner duct wall of the compressor, from several successive compressor stages at points which each lie between a stator vane and a rotor blade ($L_2$, 35'; $L_1$, 5') to be routed to the respective annuli (46, 46'; 45, 45').

2. System of Claim 1, characterized in that the ports (40'; 43') are formed between downstream faces of the spacers (37; 38) and lateral faces of the rotor disks (5, 35) adjoining thereto.

3. System of Claim 1 or 2, where the spacers (37) exhibit cavities (A; B) which are open on both sides relative to adjacent lateral outer faces of the disks (5; 35) and are separated from one another by a central radial web, characterized in that the ports (40'; 40) are arranged on or in downstream outer and/or (40; 43) inner axial wall portions of the spacers (37) and communicate with the respective one cavity (A).

4. System of Claim 3, characterized in that the supply of compressed air from the compressor duct into the respective cavity (A) is provided via leakage flow (39; 42) past an abutment joint between the downstream faces of the outer axial wall portions of the spacers (37; 38) and adjacent companion faces of the blade pedestals.

5. System of one or several of the Claims 1 to 4, characterized in that the annuli between adjacent rotor disks (5; 35, 36) are subdivided by means of air chambers (47; 48) which are integrated in axial spacing means ($D_2$; $D_3$) of the disks and are separated from one another coaxially across the circumference by means of partitions, into outer and inner annuli (45, 45'; 46, 46'), which communicate with the air chambers (47; 48) through holes (41, 41'; 44, 44') in the outer and inner wall sections of the spacer means.

6. System of or several of the Claims 1 to 5, where a stator cascade (1) of the final axial-flow compressor stage is immediately followed by an axial-flow diffusor (2) communicating with the engine combustion chamber, said diffusor being arranged, together with the stator cascade (1), above the stationary member (23) of a rotor main seal, the rotating member (R) of which is formed on the radially outer side of a carrier disk (22), characterized by the following features:
   - the rotating seal member (R) is designed as a spacing means between the final rotor disk (5) and the carrier disk (22);
   - an annular duct (11) is formed between the forward sections of the stationary and rotating members of the main seal and rear blade root portions of the final rotor disk (5);
   - the annular duct (11) is energized with compressor air tapped at a point downstream of the axial-flow diffusor (2) and communicates with the compressor duct through an annular clearance (13) arranged between the rotor blades (5') and the stator cascade (1);
   - pressurized with air from the annular duct (11) are both the main seal and outer and inner annuli (27; 27') formed between the final rotor disk (5) and the carrier disk (22);
   - division into outer and inner annuli (27; 27') is achieved by means of outer and inner wall sections of air chambers (28) arranged between the final rotor disk (5) and the carrier disk (22).

7. System of Claim 6, characterized in that the annular duct (11) communicates with the annuli (27; 27') through air supply ports or slots (26) and that the ports or slots (26) are formed either at the upstream end of the rotating seal member (R) or between its forward faces and the adjoining companion faces of the final rotor disk (5).

8. System of Claim 6 or 7, characterized in that the annular duct (11) communicates with an air connecting duct (P) which is arranged between the stationary member (23) of the main seal and the inner wall portions of the stator cascade (1) and the axial-flow diffusor (2) and which in turn connects to the secondary air supply from the combustion chamber - downstream of the axial-flow diffusor (2) - through air supply holes (10) in the inner part (3) of the combustion chamber outer casing wall.

9. System of Claim 8, characterized in that the pressure supply holes (10) connect to an inner dual casing annulus of the combustion chamber.

10. System of one or more of the Claims 1 to 9, characterized in that the ports (26; 40; 43) at least partially take a slot-like shape.

11. System of one or more of the Claims 1 to 10, characterized in that the ports (40; 43) arranged in the respective downstream inner axial wall portions of the spacers (37; 38) are preferably given an oval section.

12. System of Claim 8, characterized in that the distribution, number and size of the air supply holes (10) depends on the required flow of vent air (9).

13. System of Claim 12, characterized in that the radial elevation of the air supply holes (10) with respect to the compressor centerline essentially coincides with the radial position of maximum air friction.

14. System of one or more of the Claims 1 to 13, characterized in that the air chambers (28; 47; 48) communicate with each other through pressure equalizing holes (49; 50) in the rotor disks (5; 35).

**Revendications**

1. Système d'optimalisation du jeu radial des aubages et d'étanchéité dans un compresseur axial d'une turbine à gaz, qui est muni d'aubages (36, 35, 5) ménageant des espaces annulaires (46, 46'; 45, 45') voisins les uns des autres, équipés d'ailettes mobiles (36', 35', 5'), aubages qui sont axialement maintenus à distance par des anneaux intercalaires (38, 37), qui forment en union avec les pieds d'ailettes voisins la paroi intérieure du canal du compresseur et dans lequel le rotor du compresseur est ventilé et thermiquement régulé au moyen de l'air comprimé (42, 49) prélevé à partir du compresseur, air qui est acheminé dans des espaces annulaires voisins les uns des autres, caractérisé en ce que l'air comprimé est acheminé via des ouvertures (43', 40') disposées sur la paroi intérieure du canal du compresseur, constituées dans chaque zone en aval d'un anneau intercalaire (38, 37) à partir de plusieurs étages du compresseur se suivant les uns les autres, chaque fois prélevé entre une ailette directrice et une ailette mobile (L2, 35'; L1, 5') et il est dirigé vers les espaces annulaires concernés (46, 46'; 45, 45').

2. Système selon la revendication 1, caractérisé en ce que les ouvertures (40', 43') sont formées entre les faces frontales en aval des anneaux intercalaires (37, 38) et les faces frontales des aubages (5, 35) latéralement adjacentes.

3. Système selon les revendications 1 ou 2, dans lequel les anneaux intercalaires (37) présentent des espaces creux (A, 0) séparés les uns des autres par une entretoise radiale au milieu, ouverts des deux côtés contre les faces frontales extérieures latérales et voisines des aubages (5, 35), caractérisé en ce que les ouvertures (40', 40) sont disposées sur ou dans les éléments de paroi axiaux extérieurs dans le sens aval et/ou (40, 43) intérieurs des anneaux intercalaires (37) et sont en communication avec celui des espaces creux (A) le concernant.

4. Système selon la revendication 3, caractérisé en ce que l'acheminement de l'air comprimé par le canal du compresseur se fait dans l'espace creux concerné (A) via un courant de fuite (39, 42) du côté du bord d'attaque entre les extrémités frontales en aval des éléments de paroi axiaux extérieurs des anneaux intercalaires (37, 38) et les faces opposées voisines des pieds d'ailettes.

5. Système selon une ou plusieurs des revendications 1 à 4, caractérisé en ce que, les espaces annulaires entre des aubages voisins (5, 35, 36) sont décomposés au moyen de chambres d'aération (47, 48) dans les espaces annulaires extérieurs et intérieurs (45, 45'; 46, 46'), incorporées par les pièces d'écartement axial (D2, D3) des aubages, séparées coaxialement les unes des autres à la périphérie par des parois intercalaires, espaces annulaires qui sont en communication avec les chambres d'aération (47, 48) grâce à des perçages (41, 41'; 44, 44') dans les sections de paroi extérieures et intérieures des pièces d'écartement-

6. Système selon une ou plusieurs des revendications 1 à 5, dans lequel à une grille d'ailette directrice (1) du dernier étage du compresseur axial est rapporté en aval un diffuseur axial (2) communiquant avec la chambre de combustion de la turbine, diffuseur qui est disposé en union avec la grille d'ailette directrice (1) au-dessus de la partie stationnaire (23) d'un joint d'étanchéité principal du rotor, dont la partie tournante (R) est réalisé radialement vers l'extérieur sur un disque support (22), caractérisé par les éléments suivants:
   - la partie tournante du joint d'étanchéité (R) sert de pièce d'écartement entre le dernier aubage (5) et le disque support (22),
   - entre les sections antérieures de l'élément stationnaire et tournant du joint d'étanchéité principal et les parties arrières d'aubages, du côté des pieds d'ailette, du dernier aubage (5) il est formé un canal annulaire (11),
   - le canal annulaire (11) est alimenté en air du compresseur prélevé au moyen du diffuseur axial (2) en aval et est relié au canal du compresseur via une fente annulaire (13) disposée entre l'ailette mobile (5') et la grille de l'ailette directrice (1) du dernier étage du compresseur,
   - à partir du canal annulaire (11) sont alimentés en air comprimé aussi bien le joint principal d'étanchéité que les espaces annulaires (27, 27') intérieurs et extérieurs formés entre le dernier aubage (5) et le disque support (22),
   - la répartition entre les espaces annulaires intérieurs et extérieurs (27, 27') est assurée au moyen des sections de paroi extérieures et intérieures des chambres d'aération (28), qui sont disposées entre le dernier aubage (5) et le disque support (22).

7.  Système selon la revendication 6, caractérisé en ce que le canal annulaire (11) est relié aux espaces annulaires (27, 27') par des ouvertures ou des fentes (26) pour l'acheminement de l'air comprimé, et en ce que les ouvertures ou fentes (26) sont formées soit à l'extrémité amont de l'élément tournant (R) du joint d'étanchéité ou entre les faces frontales antérieures de celui-ci et les faces opposées adjacentes du dernier aubage (5).

8.  Système selon les revendications 6 ou 7, caractérisé en ce que le canal annulaire (11) est en liaison avec un canal (P) d'acheminement de l'air comprimé disposé entre la partie stationnaire (23) du joint principal d'étanchéité et les éléments de paroi intérieurs de la grille d'ailette directrice (1) et du diffuseur axial (2), canal (P) qui est d'autre part, par des perçages (10) d'alimentation en air comprimé dans la partie intérieure (3) de la paroi de carter extérieur de la chambre de combustion, relié à l'alimentation en air secondaire à partir de la chambre de combustion - en aval du diffuseur axial (2).

9.  Système selon la revendication 8, caractérisé en ce que les perçages (10) d'alimentation en air comprimé sont reliés à un espace annulaire intérieur du double carter de la chambre de combustion.

10. Système selon une ou plusieurs des revendications 1 à 9, caractérisé en ce que, les ouvertures (26, 40, 43) ont au moins partiellement la forme de fentes.

11. Système selon une ou plusieurs des revendications 1 à 10, caractérisé en ce que, chacune des ouvertures (40, 43) disposées dans les éléments de paroi intérieurs axiaux en aval des anneaux intercalaires (37, 38) ont la forme de perçages avec de préférence une section ovale.

12. Système selon la revendication 8, caractérisé en ce que la répartition, le nombre, et les dimensions des perçages (10) d'amenée d'air comprimé dépendent de la quantité nécessaire (9) d'air de ventilation.

13. Système selon la revendication 12, caractérisé en ce que la hauteur radiale de placement des perçages (10) d'amenée d'air comprimé par rapport à l'axe du compresseur concorde essentiellement avec la position radiale du frottement d'air maximum.

14. Système selon une ou plusieurs des revendications 1 à 13, caractérisé en ce que les chambres d'aération (28, 47, 48) sont en liaison les unes avec les autres grâce à des perçages d'équilibrage de pression (49, 50) dans les aubages (5, 35).

FIG.1

FIG.2

FIG.3

FIG.4

EP 0 235 641 B1

FIG.5